# EUROPÄISCHE PATENTSCHRIFT

(11) **EP 4 319 560 B1**
(45) Veröffentlichungstag und Bekanntmachung des Hinweises auf die Patenterteilung: **25.12.2024**
(21) Anmeldenummer: 21717810.2
(22) Anmeldetag: 06.04.2021
(51) Int. Cl.: A22C 25/08, G01B 11/06, A22C 17/00, B07C 5/342, G01B 11/30, G01N 21/892, G06V 10/145, G06V 10/44, G06V 10/60, G06V 20/68, G01N 21/84

(54) **VERFAHREN UND VORRICHTUNG ZUR ERKENNUNG VON FEHLSTELLEN IN DER OBERFLÄCHE GEWÖLBTER ARTIKEL**
METHOD AND APPARATUS FOR IDENTIFIYING DEFECTS IN THE SURFACE OF CONVEX ITEMS
PROCÉDÉ ET APPAREIL D'IDENTIFICATION DE DÉFAUTS DANS LA SURFACE DE PRODUITS CONVEXES

(43) Veröffentlichungstag der Anmeldung: 14.02.2024
(73) Patentinhaber: NORDISCHER MASCHINENBAU RUD. BAADER GMBH + CO KG, 23560 Lübeck (DE)
(72) Erfinder: JACOBSEN, Ulf, 23560 Lübeck (DE)
(74) Vertreter: Stork Bamberger Patentanwälte PartmbB
(86) Internationale Anmeldenummer: PCT/EP2021/058900
(87) Internationale Veröffentlichungsnummer: WO 2022/214159

(56) Entgegenhaltungen:
- WO-A1-2016/126835
- DE-A1- 102009 036 389
- JP-A- H01 132 333

## Beschreibung

Die vorliegende Erfindung betrifft ein Verfahren zum automatischen Detektieren von Fehlstellen in der Oberfläche gewölbter Artikel der lebensmittelverarbeitenden Industrie. Des Weiteren betrifft die Erfindung eine Vorrichtung zum automatischen Detektieren von Fehlstellen in der Oberfläche gewölbter Artikel der lebensmittelverarbeitenden Industrie.

Derartige Verfahren und Vorrichtungen kommen bei der automatischen Verarbeitung von Artikeln der lebensmittelverarbeitenden Industrie zum Einsatz. Ziel ist es, mögliche Fehlstellen in Artikeln automatisch zu detektieren, um so beispielsweise zu prüfen, ob die Artikel den gewünschten Qualitätsanforderungen entsprechen. Die Erkennung und Lokalisation von Fehlstellen dient unter anderem auch dazu, erforderliche Basisdaten für ein automatisches Nachtrimmen bzw. Nachbearbeiten bereitzustellen, um mögliche Fehlstellen herausscheiden oder abtrennen zu können.

So zeigt beispielsweise das Dokument EP 2 531 038 B1 eine Lebensmittelverarbeitungseinrichtung zum Erfassen und Abschneiden von hartem Gewebe aus Lebensmittelprodukten. Die Erfassung möglicher Fehlstellen erfolgt gemäß der Lehre des Dokuments EP 2 531 038 B1 mittels Röntgenstrahlung.

In DE 10 2009 036389 A1 wird mittels eines Linienlasers und einer Kamera die Höhe von Artikeln auf einem Förderband bestimmt, um Fehlstellen zu detektieren.

Die Verwendung von Röntgenstrahlung bei der Qualitäts- und Fehlstellenbeurteilung von Artikeln der lebensmittelverarbeitenden Industrie ist stets mit einem erhöhten Aufwand und entsprechend hohen Kosten verbunden. Da die Artikel zum Erkennen möglicher Fehlstellen mittels Röntgenstrahlung durchleuchtet werden, ist es erforderlich, entsprechende angepasste Fördereinrichtungen bereitzustellen, die - zumindest im Bereich der Fehlstellenerkennung - für Röntgenstrahlung hinreichend durchlässig sind. Hinzu kommen Aufwand und Kosten für Betrieb und Wartung der Röntgenquelle sowie die Beachtung der im Umgang mit Röntgenstrahlung erforderlichen Sicherheitsbestimmungen, insbesondere solchen zum Strahlenschutz. Insgesamt ist eine Untersuchung der Artikel mittels Röntgenstrahlung mit hohem Aufwand verbunden.

Es ist daher Aufgabe der vorliegenden Erfindung, ein Verfahren vorzuschlagen, das eine zuverlässige Detektion möglicher, in der Oberfläche gewölbter Artikel der lebensmittelverarbeitenden Industrie vorhandener Fehlstellen bei gleichzeitig möglichst einfachem apparativen Aufbau gewährleistet. Insbesondere ist es Aufgabe der Erfindung, eine solche Fehlstellenerkennung ohne Nutzung von Röntgenstrahlung zu gewährleisten. Des Weiteren besteht die Aufgabe darin, eine entsprechende Vorrichtung vorzuschlagen.

Die Aufgabe wird durch ein Verfahren mit den eingangs genannten Merkmalen dadurch gelöst, dass das Verfahren folgende Schritte umfasst: Fördern der Artikel mittels eines Förderbandes in eine Förderrichtung, Beleuchten der Artikel mittels einer oberhalb des Förderbandes angeordneten Linienlaserlichtquelle, sodass das eine mittels der Linienlaserlichtquelle erzeugte Laserlinie quer zu der Förderrichtung ausgerichtet ist, zeilenweises Erfassen zurückgestreuten Lichtes mittels einer oberhalb des Förderbandes angeordneten Kamera während des Förderns der Artikel jeweils durch Aufnahme eines Zeilenprofils, Ermitteln von die Querschnittshöhen repräsentierenden Rohzeilenhöhendaten aus dem aufgenommenen Zeilenprofil, Ermitteln von Rohoberflächenhöhendaten durch Zusammensetzen der in Förderrichtung ermittelten Rohzeilenhöhendaten, Ermitteln geglätteter Oberflächenhöhendaten durch Filtern der Rohzeilenhöhendaten und/oder der Rohoberflächenhöhendaten unter Anwendung mindestens eines Filterkriteriums, Ermitteln von Differenzhöhendaten durch Subtraktion der geglätteten Oberflächenhöhendaten von den Rohzeilenhöhendaten. Vorzugsweise ist die Kamera als Zeilenkamera ausgebildet. Insbesondere kommen Kameras der Produktserie "RANGER" aus dem Hause der Firma SICK zum Einsatz.

Das erfindungsgemäße Verfahren bietet den Vorteil, dass mit vergleichsweise geringem apparativen Aufwand mögliche Fehlstellen in der Oberfläche gewölbter Artikel der lebensmittelverarbeitenden Industrie zuverlässig automatisch detektiert werden können.

Hierzu kommt ausschließlich Licht im sichtbaren und/oder infraroten Wellenlängenbereich zum Einsatz. Ein weiterer Vorteil besteht darin, dass die Erkennung möglicher Fehlstellen allein durch optische Abtastung der Oberfläche der zu untersuchenden Artikel erfolgt. Die Artikel können daher auf einem üblichen Endlosförderband transportiert werden. Die zur automatischen Erkennung der Fehlstellen benötigten optischen Geräte beschränken sich daher auf die genannte Linienlaserlichtquelle sowie die Kamera.

Die Kamera ist insbesondere ausgebildet, jeweils Zeilenprofile der mittels der Linienlaserlichtquelle beleuchteten Artikel aufzunehmen. Anders ausgedrückt werden die Artikel zeilenweise optisch abgetastet. Aus diesen Zeilenprofilen werden Rohzeilenhöhendaten ermittelt, also zu jedem Zeilenprofil, das die Helligkeitsverteilung des durch den Artikel zurückgestreuten Lichtanteils einer abgetasteten Zeile wiedergibt, ein entsprechender Datensatz, der einem Höhenprofil entlang dieser Zeile entspricht.

So werden aus den optisch aufgenommenen Zeilenprofilen geometrische Daten, nämlich die jeweilige Höhe des Artikels, gemessen ab der Oberfläche des Förderbandes, für jede der genannten Zeilen ermittelt. Im Weiteren wird durch die Ermittlung von Rohoberflächenhöhendaten, die sich durch Zusammensetzen der Rohzeilenhöhe in der Förderrichtung ergeben, ein Höhenprofil für den gesamten optisch abgetasteten Artikel über der (x,y)-Ebene ermittelt. Die x-Richtung bezeichnet hierbei jene Richtung, die parallel zur Förderrichtung ist, während die y-Richtung im rechten Winkel zu dieser verläuft. Hierzu wird beispielsweise die Bandgeschwindigkeit in der Förderrichtung erfasst bzw. die Bandgeschwindigkeit elektronisch vorgegeben, sodass jederzeit bekannt ist, wo sich der Artikel befindet und wie die Rohzeilenhöhen zu dem genannten Höhenprofil zusammengesetzt werden.

Das erfindungsgemäße Verfahren bietet so den Vorteil, dass es allein durch optische Abtastung ermöglicht, Fehlstellen in den Artikeln automatisch zu detektieren. So werden erfindungsgemäß aus den Rohoberflächenhöhendaten durch entsprechende Filterung geglättete Oberflächenhöhendaten ermittelt. Durch anschließendes Erzeugen von Differenzhöhendaten durch Subtraktion der Rohoberflächenhöhendaten von den geglätteten Oberflächenhöhendaten werden Differenzhöhendaten ermittelt, die Auskunft über mögliche Fehlstellen in den Artikeln geben. Damit stellt das erfindungsgemäße Verfahren eine Lösung bereit, die sowohl mit geringem technischem apparativem Aufwand einhergeht, als sich auch von der Kostenseite her, als besonders günstig erweist.

Eine zweckmäßige Ausgestaltung der Erfindung ist gekennzeichnet durch Vergleichen der Differenzhöhendaten mit mindestens einem vorgegebenen Schwellenwert t₁ zum Erkennen der Fehlstellen in der Oberfläche der Artikel und Ermitteln von Fehlstellendaten, die zumindest die Positionen der Fehlstellen repräsentieren. Dies bietet den Vorteil, dass die Position(en) möglicher Fehlstellen unmittelbar anhand der Fehlstellendaten identifiziert werden können.

Durch Vorgabe des genannten Schwellenwertes ist es zudem möglich, die Sensitivität des erfindungsgemäßen Verfahrens zur Erkennung von möglichen Fehlstellen in den Artikeln an die jeweils gegebenen Umstände anzupassen. Dies erlaubt eine zuverlässige und präzise Erkennung von möglichen Fehlstellen, insbesondere eine komfortable Anpassung der Auslöseschwelle, bei der Fehlstellen erkannt werden. Beispielsweise kann so die Empfindlichkeit der automatischen Erkennung von Fehlstellen an die jeweils zu untersuchenden Artikel optimal angepasst werden.

Eine weitere zweckmäßige Ausgestaltung der Erfindung ist gekennzeichnet durch Absuchen der Differenzhöhendaten nach Clustern und Klassifizieren dieser als Fehlstellen. Dies bietet den Vorteil, dass nur solche Bereiche als Fehlstellen erkannt werden, in denen es zu einer entsprechenden Häufung kommt. Auf diese Weise ist die Erkennung möglicher Fehlstellen äußerst robust gegenüber Störeinflüssen. Damit ein Bereich als Fehlstelle erkannt wird, muss es in einem (zweidimensionalen) räumlichen Bereich zu der genannten Häufung kommen, damit diese eindeutig als eine solche erkannt und identifiziert wird.

Eine bevorzugte Weiterbildung der Erfindung zeichnet sich dadurch aus, dass die Beleuchtung mittels der Linienlaserlichtquelle, die im Folgenden auch kurz als Laserlichtquelle bezeichnet wird, schräg erfolgt, indem die Linienlaserlichtquelle gegenüber dem Normalenvektor des Förderbandes um einen Beleuchtungswinkel im Bereich zwischen 10° und 80° geneigt angeordnet ist.

Die Schrägstellung der Laserlichtquelle wirkt sich vorteilhaft auf die Ausleuchtung des optisch abzutastenden Artikels aus, da unterschiedliche Artikelhöhen zu einer entsprechend stärkeren "Auslenkung" der Laserlichtlinie gegenüber einer auf gleicher Höhe verlaufenden Laserlichtgrundlinie, die sich auf einem Artikel konstanter Höhe einstellen würde, führen, sodass die anschließende Ermittlung der Rohzeilenhöhendaten eine entsprechend höhere Auflösung erfährt.

Eine weitere zweckmäßige Ausbildung der Erfindung ist dadurch gekennzeichnet, dass die Aufnahme des Zeilenprofils unter einem Aufnahmewinkel zwischen 15° und 90° gegenüber dem Normalenvektor des Förderbandes erfolgt. Anders ausgedrückt erfolgt die Aufnahme des Zeilenprofils entweder unter Schrägstellung oder mit Blick aus der Senkrechten auf den Artikel.

Gemäß einer weiteren bevorzugten Ausbildung der Erfindung ist der Betrag des Aufnahmewinkels kleiner als der Betrag des Beleuchtungswinkels. Dies hat den Vorteil, dass sowohl die Beleuchtung der Artikel mit der Laserlinie durch die Laserlichtquelle als auch die Betrachtung des zurückgestreuten Lichts mittels der Kamera unter Schrägstellung entgegen der Förderrichtung erfolgt. So wird verhindert, dass Erhebungen, also Bereiche der Artikel größerer Höhe, zu unerwünschten Verschattungen der Laserlichtquelle führen, die andernfalls zu einer Störung der Erstellung der Rohzeilenhöhendaten führen könnte.

Eine weitere zweckmäßige Ausbildung der Erfindung ist dadurch gekennzeichnet, dass die Rohoberflächenhöhendaten mit einem vorgegebenen unteren Schwellenwert t, verglichen werden, und falls diese kleiner als der untere Schwellenwert t, sind, als Hintergrund gekennzeichnet werden. Vorteilhafterweise findet so eine Differenzierung zwischen dem Hintergrund, der insbesondere durch das Förderband gebildet wird, und einem auf diesen geförderten Artikel statt. Ein weiterer Vorteil besteht darin, dass durch die Trennung der Höheninformation von Hintergrund und Artikel, die Berandung der Artikel in den Oberflächenhöhendaten eindeutig kennzeichenbar ist.

Eine weitere zweckmäßige Ausgestaltung der Erfindung ist dadurch gekennzeichnet, dass die Rohoberflächenhöhendaten mit einem vorgegebenen oberen Schwellenwert tₒ verglichen werden, und falls diese größer als der obere Schwellenwert tₒ sind, als Messfehler gekennzeichnet werden. Insbesondere durch Wahl eines oberen Schwellenwertes, der oberhalb der maximal zu erwartenden Höhenwerte liegt, können durch Messfehler oder Artefakte bedingte Störungen zuverlässig ausgeblendet werden. Derartige unzulässige Höhenwerte werden auf diese Weise ausgeblendet und bilden daher keine relevante Störgröße mehr, die die weitere Verarbeitung nachteilig beeinflussen könnte.

Eine weitere zweckmäßige Ausbildung der Erfindung ist dadurch gekennzeichnet, dass das Ermitteln geglätteter Oberflächenhöhendaten und/oder der Rohzeilenhöhendaten zumindest mittels Filterung durch Interpolation erfolgt. Auf diese Weise werden mittels Filterung geglättete Oberflächenhöhendaten gewonnen, die quasi einen idealisierten Artikel mit möglichst glatter Oberfläche repräsentieren. Dieser mittels der geglätteten Oberflächenhöhendaten ermittelte hypothetische Artikel weist demnach keine lokalen Oberflächenunebenheiten auf, sondern eine durchgehend glatte Oberfläche, also eine solche, die bezüglich der Größe des gesamten Artikels vernachlässigbar geringe lokale Höhenänderungen aufweist.

Gemäß einer weiteren bevorzugten Ausführungsform erfolgt die Filterung durch stückweise lineare Interpolation. Dies bietet den Vorteil möglichst geringer numerischer Komplexität bei hinreichender Genauigkeit zur Berechnung der geglätteten Oberflächenhöhendaten.

Eine weitere zweckmäßige Ausbildung der Erfindung ist dadurch gekennzeichnet, dass die Filterung eine Rausch-/Störunterdrückung umfasst. Dies bietet den Vorteil, dass Kleinsignalstörungen, insbesondere solche, die gemäß statistischer Verteilung, die zum Beispiel aufgrund weißen Rauschens einwirken, wirksam ausgeblendet werden können. So wird vermieden, dass derartige Störungen zu Fehlauswertungen hinsichtlich der Ermittlung der Fehlstellendaten führen.

Eine bevorzugte Weiterbildung der Erfindung zeichnet sich dadurch aus, dass die Rausch-/Störunterdrückung durch morphologische Filterung bewirkt wird. Anders ausgedrückt wird die Rausch-/Störunterdrückung dadurch bewirkt, dass große Strukturen der jeweiligen Rohzeilenhöhendaten und/oder Oberflächenhöhendaten erhalten bleiben und kleine Strukturen entfernt werden. Auf diese Weise werden die ehemals vorhandenen Störungen vollständig oder jedenfalls zum Großteil eliminiert.

Eine weitere zweckmäßige Ausgestaltung der Erfindung ist durch Durchführen einer Kantenerkennung der Rohzeilenhöhendaten und/oder der geglätteten Oberflächenhöhendaten zur Ermittlung des Randes der Artikel und Maskieren der Rohzeilenhöhendaten und/oder der geglätteten Oberflächenhöhendaten, die in einem Randbereich lokalisiert sind, wobei der Randbereich sich von dem Rand der Artikel bis zu einer von diesem Rand um eine vorgegebene Randbreite beabstandeten Randbereichsgrenze erstreckt sowie Ausblenden der maskierten Rohzeilenhöhendaten und/oder der geglätteten Oberflächenhöhendaten bei dem Ermitteln der Differenzhöhendaten gekennzeichnet.

Vorteilhafterweise wird so zunächst der Außenrand des jeweiligen Artikels erkannt und ausgehend von diesem erkannten Außenrand ein Randbereich definiert, der anschließend herausmaskiert wird, also bei der Verarbeitung nicht berücksichtigt wird. Dieses ist insbesondere deswegen vorteilhaft, da gerade im Randbereich der Artikel die Änderungsrate bzw. der Gradient der Artikelhöhe verhältnismäßig groß ist. Derartig große Änderungsraten der Artikelhöhe könnten - würden diese nicht wie zuvor beschrieben, durch Maskierung ausgeblendet werden - gegebenenfalls dazu führen, dass diese Randbereiche fälschlicherweise als Fehlstellen klassifiziert würden. Durch die genannten Verfahrensmerkmale wird dies zuverlässig ausgeschlossen und so insgesamt die Robustheit des erfindungsgemäßen Verfahrens gegenüber Fehlauswertungen signifikant erhöht und stets eine zuverlässige Fehlstellenerkennung gewährleistet.

Eine bevorzugte Weiterbildung der Erfindung zeichnet sich durch Durchsuchen der Fehlstellendaten nach Fehlstellenclustern und Kennzeichnen derjenigen Fehlstellencluster, deren Flächenmaß einen vorgegebenen unteren Flächenschwellenwert tfᵤ überschreitet und Kennzeichnen derselben als Fehlstellen aus. Die Vorgabe eines unteren Flächenschwellenwertes bietet den Vorteil, dass nur solche Fehlstellencluster als Fehlstellen bewertet werden, deren Flächenmaß größer als der genannte Schwellenwert ist.

So wird sichergestellt, dass nur solche Bereiche als Fehlstellen gewertet werden, die eine ausreichende Flächenausdehnung aufweisen. Hierdurch wird die Auswertung einerseits robuster gegenüber möglichen Störungen und andererseits kann durch Vorgabe des genannten unteren Schwellenwertes die Klassifizierung, ob es sich um eine Fehlstellung oder nicht handelt, an die jeweiligen Gegebenheiten, insbesondere an die Eigenschaften der zu untersuchenden Artikel angepasst werden.

Gemäß einer weiteren bevorzugten Ausführungsform sind die Artikel Fischfilets und die Fehlstellen mögliche, in den Fischfilets vorhandene, Zwischenräume. Die vorliegende Erfindung eignet sich daher insbesondere für das automatische Detektieren von Fehlstellen, in Form von Zwischenräumen, die auch als "gaps" bezeichnet werden, in der Oberfläche von Fischfilets. Mit dem erfindungsgemäßen Verfahren ist es also möglich, vollautomatisch die Qualität von Fischfilets anhand der genannten Fehlstellen zu bestimmen.

Eine weitere zweckmäßige Ausbildung der Erfindung ist dadurch gekennzeichnet, dass die Beleuchtung der Fischfilets mit rotem Laserlicht durchgeführt wird. Die Beleuchtung mit rotem Laserlicht wirkt sich insbesondere positiv auf den Kontrastreichtum des zurückgestreuten Lichts aus, sodass die mittels der Kamera aufgenommenen Zeilenprofile mit hoher Genauigkeit in Rohzeilenhöhendaten umgewandelt werden können.

Eine bevorzugte Weiterbildung der Erfindung zeichnet sich durch automatisches Ausschleusen derjenigen Fischfilets von dem Förderband, deren ermittelte Fehlstellen einen vorbestimmten Fehlstellenschwellenwert t_{fs} überschreiten, aus. Vorteilhaft werden so vollautomatisch diejenigen Fischfilets aus dem Produktionsprozess ausgeschleust, die so viele Fehlstellen aufweisen, dass diese für die weitere Verarbeitung nicht geeignet sind oder alternativ einer weitergehenden Nachbearbeitung zugeführt werden

Des Weiteren wird die Aufgabe durch eine entsprechende Vorrichtung mit den eingangs genannten Merkmalen dadurch gelöst, dass die Vorrichtung eine zum Fördern der Artikel mittels eines Förderbandes in eine Förderrichtung eingerichtete Fördereinrichtung, eine zum Beleuchten der Artikel eingerichtete Linienlaserlichtquelle, die oberhalb des Förderbandes derart angeordnet ist, dass eine mittels der Linienlaserlichtquelle erzeugte Laserlinie quer zu der Förderrichtung ausgerichtet ist, eine zum zeilenweisen Erfassen zurückgestreuten bzw. reflektierten Lichtes eingerichtete Kamera, die oberhalb des Förderbandes angeordnet ist und ausgebildet ist, während des Förderns der Artikel Zeilenprofile aufzunehmen, eine zum Ermitteln von die Querschnittshöhen repräsentierenden Rohzeilenhöhendaten aus dem aufgenommenen Zeilenprofil eingerichtete Auswerteeinrichtung umfasst, wobei die Auswerteeinrichtung zudem ausgebildet ist, Rohoberflächenhöhendaten durch Zusammensetzen der in Förderrichtung ermittelten Rohzeilenhöhendaten zu ermitteln, geglättete Oberflächenhöhendaten durch Filtern der Rohzeilenhöhendaten und/oder der Rohoberflächenhöhendaten unter Anwendung mindestens eines Filterkriteriums zu ermitteln, Differenzhöhendaten durch Subtraktion der geglätteten Oberflächenhöhendaten von den Rohzeilenhöhendaten zu ermitteln.

Die mit der erfindungsgemäßen Vorrichtung verbundenen Vorteile entsprechen im Wesentlichen denen, die bereits im Zusammenhang mit dem erfindungsgemäßen Verfahren zuvor erläutert worden sind. Da insbesondere die Auswerteeinrichtung der erfindungsgemäßen Vorrichtung eingerichtet und ausgebildet ist, die erfindungsgemäßen Verfahrensschritte auszuführen, entsprechen die durch die erfindungsgemäße Vorrichtung erzielten Vorteile in gleicher Weise denen des erfindungsgemäßen Verfahrens, auf welche an dieser Stelle im Zusammenhang mit der erfindungsgemäßen Vorrichtung zur Vermeidung von Wiederholungen verwiesen wird.

Eine weitere zweckmäßige Ausbildung der Erfindung ist dadurch gekennzeichnet, dass die Auswerteeinrichtung weiter ausgebildet ist, die Differenzhöhendaten mit mindestens einem vorgegebenen Schwellenwert t₁ zum Erkennen der Fehlstellen in der Oberfläche der Artikel und Ermitteln von Fehlstellendaten zu vergleichen, wobei die Fehlstellendaten zumindest die Positionen der Fehlstellen repräsentieren. Vorzugsweise werden die Positionen relativ zu einem gewählten Referenzpunkt eines jeden Artikels angegeben. Alternativ können die Positionen bzgl. eines ortsfesten Koordinatensystems angegeben werden.

Eine bevorzugte Weiterbildung der Erfindung zeichnet sich dadurch aus, dass die Auswerteeinrichtung weiter ausgebildet ist, die Differenzhöhendaten nach vorgegebenen Clustern abzusuchen und diese als Fehlstellen zu klassifizieren.

Eine weitere zweckmäßige Ausbildung der Erfindung ist dadurch gekennzeichnet, dass die Laserlichtquelle s gegenüber der dem Normalenvektor des Förderbandes um einen Beleuchtungswinkel im Bereich zwischen 10° und 80° geneigt angeordnet ist.

Gemäß einer weiteren bevorzugten Ausführungsform ist die Kamera derart angeordnet, dass die Aufnahme des Zeilenprofils unter einem Aufnahmewinkel zwischen 15° und 90° gegenüber dem Normalenvektor des Förderbandes erfolgt.

Eine bevorzugte Weiterbildung der Erfindung zeichnet sich dadurch aus, dass die Laserlichtquelle sowie die Kamera derart angeordnet sind, dass der Betrag des Aufnahmewinkels kleiner als der Betrag des Beleuchtungswinkels ist.

Eine weitere zweckmäßige Ausgestaltung der Erfindung ist dadurch gekennzeichnet, dass die Auswerteeinrichtung ferner ausgebildet ist, die Rohoberflächenhöhendaten mit einem vorgegebenen unteren Schwellenwert t, zu vergleichen, und falls diese kleiner als der untere Schwellenwert t, sind, als Hintergrund zu kennzeichnen.

Eine bevorzugte Weiterbildung der Erfindung zeichnet sich dadurch aus, dass die Auswerteeinrichtung ferner ausgebildet ist, Rohoberflächenhöhendaten mit einem vorgegebenen oberen Schwellenwert tₒ zu vergleichen, und falls diese größer als der obere Schwellenwert tₒ sind, als Messfehler zu kennzeichnen.

Eine weitere zweckmäßige Ausgestaltung der Erfindung ist gekennzeichnet dadurch, dass die Auswerteeinrichtung mindestens ein Interpolationsfilter umfasst, das eingerichtet ist, die geglätteten Oberflächenhöhendaten mittels Filterung durch Interpolation zu ermitteln.

Eine bevorzugte Weiterbildung der Erfindung zeichnet sich dadurch aus, dass das Interpolationsfilter zur Filterung durch stückweise lineare Interpolation eingerichtet ist.

Eine weitere zweckmäßige Ausgestaltung der Erfindung ist dadurch gekennzeichnet, dass die Auswerteeinrichtung ein zur Rausch-/Störunterdrückung ausgebildetes Filter umfasst.

Eine bevorzugte Weiterbildung der Erfindung zeichnet sich dadurch aus, dass das weitere Filter als morphologisches Filter ausgebildet ist.

Eine weitere zweckmäßige Ausbildung der Erfindung ist dadurch gekennzeichnet, dass die Auswerteeinrichtung eine Kantenerkennungseinrichtung umfasst, die ausgebildet ist, eine Kantenerkennung der Rohzeilenhöhendaten und/oder der geglätteten Oberflächenhöhendaten zur Ermittlung des Randes der Artikel durchzuführen und, die Auswerteeinrichtung eine Maskierungseinheit umfasst, die zum Maskieren derjenigen der Rohzeilenhöhendaten und/oder der geglätteten Oberflächenhöhendaten ausgebildet ist, die in einem Randbereich lokalisiert sind, wobei der Randbereich sich von dem Rand der Artikel bis zu einer von diesem Rand um eine vorgegebene Randbreite beabstandeten Randbereichsgrenze erstreckt und die Auswerteeinrichtung eingerichtet ist, die maskierten Rohzeilenhöhendaten und/oder die geglätteten Oberflächenhöhendaten bei dem Ermitteln der Differenzhöhendaten auszublenden.

Eine bevorzugte Weiterbildung der Erfindung zeichnet sich dadurch aus, dass die Auswerteeinrichtung eine Fehlstellenclustererkennungseinheit umfasst, die ausgebildet ist, die Fehlstellendaten nach Fehlstellenclustern zu durchsuchen und diejenigen der Fehlstellencluster als Fehlstellen zu kennzeichnen, deren Flächenmaß einen vorgegebenen unteren Flächenschwellenwert tfᵤ überschreitet.

Eine bevorzugte Weiterbildung der Erfindung zeichnet sich dadurch aus, dass die Artikel Fischfilets sind und die Fehlstellen mögliche in den Fischfilets vorhandene Zwischenräume.

Eine weitere zweckmäßige Ausgestaltung der Erfindung ist dadurch gekennzeichnet, dass die Laserlichtquelle rotes Laserlicht bereitstellt.

Gemäß einer weiteren bevorzugten Ausbildung umfasst die Erfindung weiter eine Ausschleuseeinrichtung, die eingerichtet ist, diejenigen der Fischfilets von dem Förderband auszuschleusen, bei denen Fehlstellen ermittelt worden sind, die einen vorbestimmten Fehlstellenschwellenwert t_{fs} überschreiten.

Die vorteilhaften Wirkungen der zuvor beschriebenen Ausbildungsbeispielen der erfindungsgemäßen Vorrichtung sind ebenfalls bereits im Zusammenhang mit dem erfindungsgemäßen Verfahren ausführlich erläutert worden. Diese gelten in analoger Weise ebenso.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht der erfindungsgemäßen Vorrichtung
- Fig. 2: eine Seitenansicht, der in Fig. 1 gezeigten Vorrichtung,
- Fig. 3: eine schematische Darstellung eines Flussdiagramms zur Veranschaulichung der ermittelten Daten
- Fig. 4: eine beispielhafte Darstellung von Rohzeilenhöhendaten und geglätteten Rohoberflächendaten
und

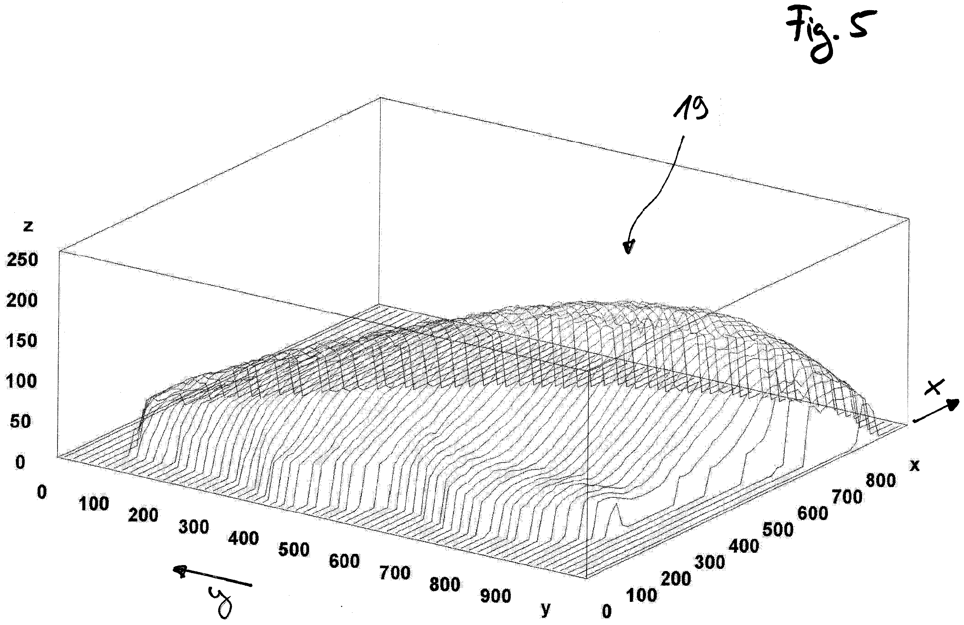

- Fig. 5: eine beispielhafte Darstellung von geglätteten Oberflächenhöhendaten.

Das erfindungsgemäße Verfahren sowie die erfindungsgemäße Vorrichtung werden im Folgenden anhand der Figuren näher beschrieben.

Verfahren und Vorrichtung erlauben das automatische Detektieren von Fehlstellen in der Oberfläche gewölbter Artikel der lebensmittelverarbeitenden Industrie. Bei den Artikeln handelt es sich vorzugsweise um solche mit einer nicht-ebenen Oberfläche, also um Artikel, deren Oberfläche beispielsweise überwiegend konvex oder konkav gewölbt ist. Auch sind das erfindungsgemäße Verfahren sowie die Vorrichtung für das Erkennen von Fehlstellen in der Oberfläche von Artikeln geeignet, deren Oberfläche sowohl konvexe, als auch konkave Bereiche umfasst. Insbesondere handelt es sich bei den Artikeln um Fischfilets, bei denen unerwünschte Spalten in der Oberfläche (sogenannte "gaps") detektiert werden sollen. Die vorliegende Erfindung ist nicht allein auf die Erkennung derartiger "gaps" als Fehlstellen beschränkt, sondern vielmehr können auch andere Arten von Fehlstellen in der Oberfläche gewölbte Artikel erkannt werden.

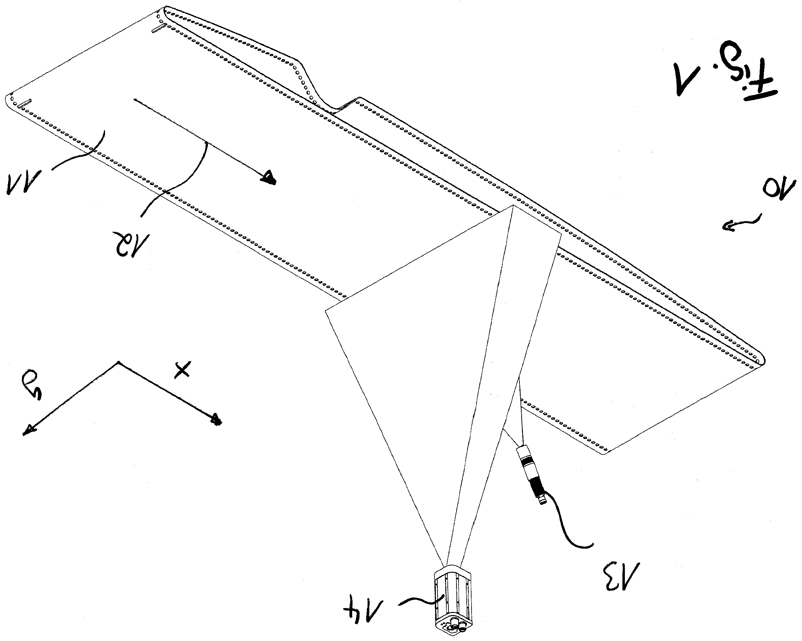

Figur 1 zeigt eine perspektivische Ansicht einiger Komponenten der erfindungsgemäßen Vorrichtung.

Die - in der Figur 1 nicht gezeigten Artikel - werden mittels einer zum Fördern der Artikel eingerichteten Fördereinrichtung 10 in eine Förderrichtung 12 gefördert. Die Fördereinrichtung 10 umfasst hierzu ein Förderband 11, vorzugsweise ein umlaufendes angetriebenes Endlosförderband. Oberhalb des Förderbandes 11 ist eine Linienlaserlichtquelle 13 angeordnet. Die Linienlaserlichtquelle 13 ist zum Beleuchten der Artikel eingerichtet, und derart angeordnet, dass die mittels der Linienlaserlichtquelle 13 erzeugte Laserlinie quer zu der Förderrichtung ausgerichtet ist. Die Ausrichtung der Linienlaserlichtquelle 13 ist vorzugsweise so gewählt, dass der Winkel zwischen der Laserlinie und der Förderrichtung 12 exakt 90° beträgt. Wahlweise kann ein hiervon abweichender Winkel eingestellt werden, beispielsweise ein Winkel größer oder gleich 45°.

Oberhalb des Förderbandes 11 ist eine Kamera 14 angeordnet. Die Kamera 14 ist ausgebildet und eingerichtet, während des Förderns der Artikel Zeilenprofile 16 aufzunehmen. Mit anderen Worten ist die Kamera 14 ausgebildet, die Artikel zeilenweise optisch abzutasten. Jedes der Zeilenprofile 16 umfasst damit Helligkeitswerte, die die Menge des zurückgestreuten Lichtes entlang der y-Koordinate repräsentieren.

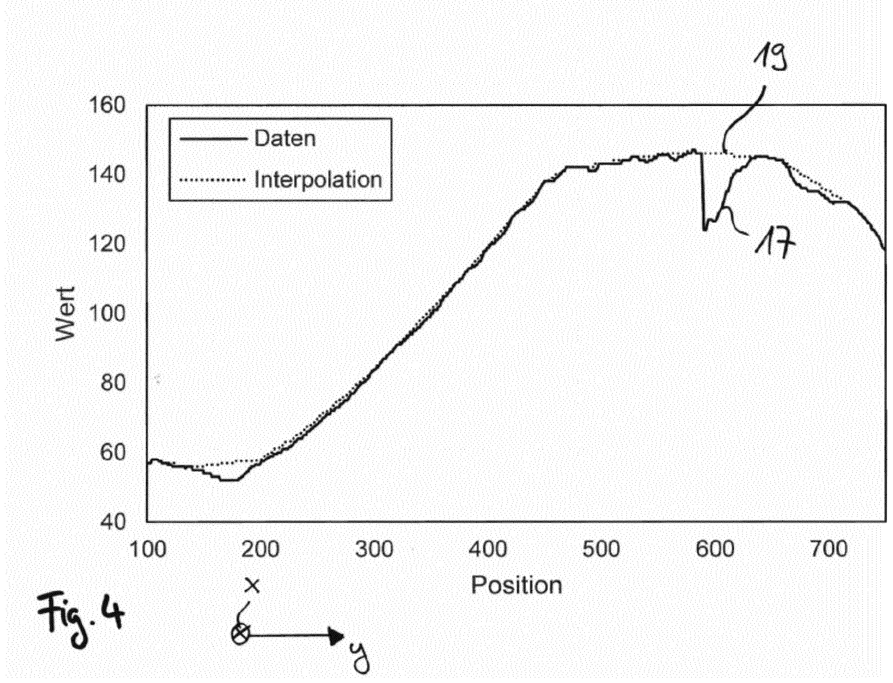

Figur 4 zeigt einen beispielhaften Verlauf der Rohzeilenhöhendaten 17, die in der Abbildung als durchgängige Linie dargestellt und in der Legende mit "Data" bezeichnet sind. Die Abszisse bezeichnet die y-Position quer zum Förderband 11, während die Ordinate den jeweiligen Höhenwert bezeichnet.

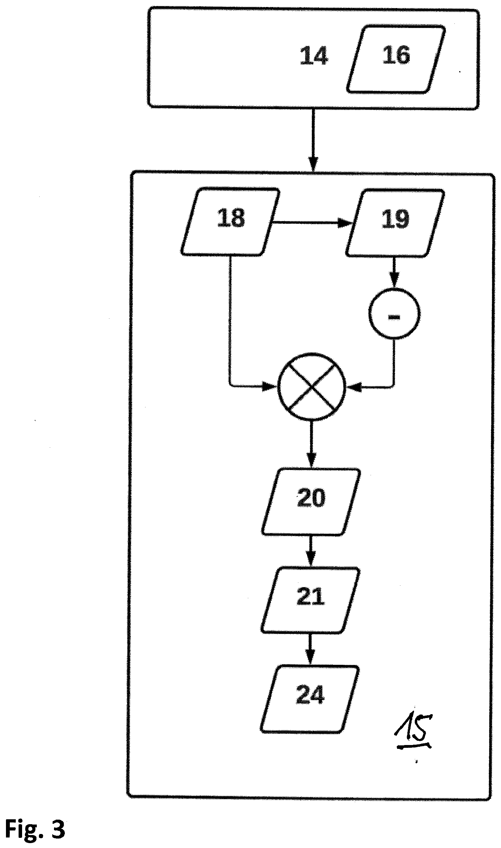

Die Aufnahme der Zeilenprofile 16 sowie deren weitere Verarbeitung wird im Folgenden anhand des in Figur 3 dargestellten Flussdiagramms näher erläutert.

Mittels einer Auswerteeinrichtung 15 werden aus dem aufgenommenen Zeilenprofil 16 Rohzeilenhöhendaten 17 ermittelt. Die Rohzeilenhöhendaten 17 repräsentieren die Querschnittshöhen des jeweils aufgenommenen Zeilenprofils 16 in y-Richtung. Die Auswerteeinrichtung 15 ist also eingerichtet, aus dem Zeilenprofil 16 ein Höhenprofil zu ermitteln. Die Rohzeilenhöhendaten 17 repräsentieren damit die jeweilige Höhe des Artikels über dessen Querschnitt bezüglich der y-Richtung. Auf diese Weise erhält man die Rohzeilenhöhendaten 17, also diskrete Höhenwerte H_{RZ} (y) für jede y-Koordinate y = n * dy, wobei n von 0 bis zur Anzahl der Bildpunkte der Kamera 14 läuft und dy das Ortsauflösungsvermögen bzw. die Pixelgröße der Kamera 14 in der y-Richtung bezeichnet.

Die Auswerteeinrichtung 15 ist weiter eingerichtet, durch Zusammensetzen der ermittelten Rohzeilenhöhendaten 17 Rohoberflächenhöhendaten 18 zu ermitteln. Die Rohoberflächenhöhendaten 18 bezeichnen diskrete Höhenwerte H_{RO} (y,x) über der insgesamt abgetasteten Fläche der Artikel.

In Figur 4 sind beispielhaft Rohzeilenhöhendaten 17 gezeigt. Wie zuvor beschrieben ist die Auswerteeinrichtung 15 ausgebildet, um aus diesen Rohzeilenhöhendaten 17 Rohoberflächenhöhendaten 18 zu erstellen. Die so erhaltenen Rohoberflächenhöhendaten 18 sind beispielhaft in Figur 4 - allerdings nur für eine Zeile - dargestellt (vgl. schwarze durchgängige Linie "Data").

Die Auswerteeinrichtung 15 ist weiter ausgebildet, durch Filtern der Rohzeilenhöhendaten 17 geglättete Oberflächenhöhendaten 19 unter Anwendung mindestens eines Filterkriteriums zu ermitteln. Die so erhaltenen geglätteten Oberflächenhöhendaten 19 sind beispielhaft in Figur 4 als punktierte Linie dargestellt und in der Legende mit "Interpolation" bezeichnet, wobei in Figur 4 wiederum nur eine Zeile wiedergegeben ist. Deutlich erkennbar ist, dass die bei der y-Position "600" liegende Fehlstelle, die sich in einer lokal begrenzten Vertiefung in den Rohzeilenhöhendaten 17 zeigt, in den geglätteten Oberflächenhöhendaten 19 herausgefiltert worden ist.

Das Filterkriterium ist folglich so zu wählen, dass lokal begrenzte Änderungen der Rohzeilenhöhendaten 17 mit vergleichsweise großen Gradienten herausgefiltert werden. Zum Einsatz kommen daher bevorzugt Interpolation- oder Glättungsfilter, die insbesondere Tiefpasscharakteristik aufweisen.

Die Erzeugung der geglätteten Oberflächenhöhendaten 19 ist auch durch Filtern der Rohoberflächenhöhendaten 18 mittels der Auswerteeinheit 15 möglich. Auch kann eine Kombination beider Filterungen zum Einsatz kommen, also beispielsweise eine Filterung der Rohzeilenhöhendaten 17 unter Berücksichtigung benachbarter Rohzeilenhöhendaten 17 bzgl. der x-Richtung.

Schließlich ist die Auswerteeinrichtung 15 ausgebildet, Differenzhöhendaten 20 durch Subtraktion der geglätteten Oberflächenhöhendaten 19 von den Rohoberflächenhöhendaten 18 zu ermitteln. Die geglätteten Oberflächenhöhendaten 19 stellen ein idealisiertes Oberflächenhöhenprofil des jeweiligen Artikels dar, so als wäre dieses störstellenfrei.

Durch die Differenzbildung aus den Rohoberflächenhöhendaten 18, die das tatsächlich ermittelte Oberflächenhöhenprofil des jeweiligen Artikels repräsentieren, und den geglätteten Oberflächenhöhendaten 19 treten mögliche lokal begrenzte Fehlstellen in den Differenzhöhendaten 20 als von Null abweichende Werte zu Tage. Anhand der Differenzhöhendaten 20 ist es also möglich, solche Fehlstellen eindeutig und präzise zu lokalisieren.

Vorzugsweise ist die Auswerteeinrichtung 15 weiter ausgebildet, die Differenzhöhendaten 20 mit mindestens einem vorgegebenen Schwellenwert t₁ zum Erkennen der Fehlstellen in der Oberfläche der Artikel zum Ermitteln von Fehlstellendaten 21 zu vergleichen. Die Fehlstellendaten 21 repräsentieren beispielsweise einen Datensatz, mit dem alle Positionen gekennzeichnet sind, bei denen die Differenzhöhendaten 20 den vorgegebenen Schwellenwert t₁ überschreiten. Die Fehlstellendaten 21 repräsentieren damit zumindest die Positionen der Fehlstellen.

Alternativ ist die die Auswerteeinrichtung weiter ausgebildet, die Differenzhöhendaten 20 nach Clustern abzusuchen und diese als Fehlstellen zu klassifizieren. Die Auswerteeinrichtung ist also eingerichtet, in Differenzhöhendaten nach zusammenhängenden lokal begrenzten Gebieten vorgegebener räumlicher Minimal oder Maximalausdehnung zu suchen und solche Gebiete als Cluster zu klassifizieren. Auf diese Weise werden Häufungspunkte erkannt und als Fehlstellen klassifiziert.

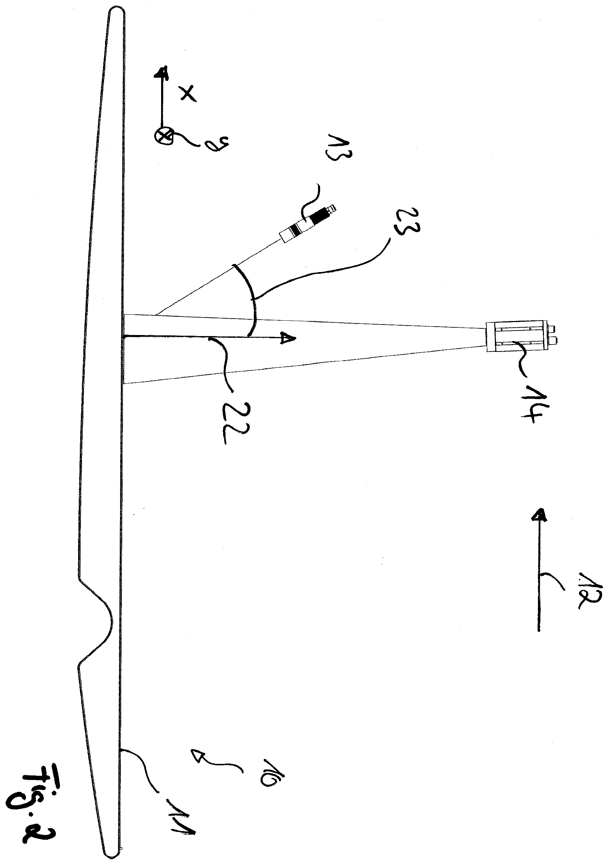

Weiter bevorzugt ist - wie gut in der Seitenansicht gemäß der Figur 2 zu sehen - die Linienlaserlichtquelle 13 gegenüber der dem Normalenvektor des Förderbandes 11 um einen Beleuchtungswinkel 23 im Bereich zwischen 10° und 80° geneigt angeordnet. Vorzugsweise ist die Linienlaserlichtquelle 13 so ausgerichtet, dass diese entgegen der Förderrichtung 12 strahlt.

Vorteilhafterweise ist zudem die Kamera 14 - entgegen der Darstellung in den Figuren 1 und 2 - derart angeordnet, dass die Aufnahme des Zeilenprofils unter einem Aufnahmewinkel zwischen 15° und 90° gegenüber dem Normalenvektor 22 des Förderbandes 11 erfolgt. Auch die Kamera 14 ist weiter bevorzugt gegen die Förderrichtung 12 geneigt angeordnet. Vorteilhafterweise sind die Laserlichtquelle 13 sowie die Kamera 14 derart angeordnet, dass der Betrag des Aufnahmewinkels größer als der Betrag des Beleuchtungswinkels 23 ist.

Gemäß einer vorteilhaften Weiterbildung der Erfindung ist die Auswerteeinrichtung 15 ferner ausgebildet, die Rohoberflächenhöhendaten 18 mit einem vorgegebenen unteren Schwellenwert t, zu vergleichen, und falls diese kleiner als der untere Schwellenwert t, sind, als Hintergrund zu kennzeichnen. Mit anderen Worten ist die Auswerteeinrichtung 15 ausgebildet, die Rohoberflächenhöhendaten 18 zu maskieren, die den genannten Schwellenwert unterschreiten. So kann eindeutig zwischen dem durch das Förderband 11 gebildeten Hintergrund und denjenigen Bereichen, in denen Rohoberflächenhöhendaten 18 von dem jeweiligen Artikel erfasst worden sind, differenziert werden.

Weiter bevorzugt ist die Auswerteeinrichtung ausgebildet, die Rohoberflächenhöhendaten 18 mit einem vorgegebenen oberen Schwellenwert tₒ zu vergleichen, und falls diese größer als der obere Schwellenwert tₒ sind, als Messfehler zu kennzeichnen. Der obere Schwellenwert kann beispielsweise so gewählt werden, dass dieser einem Höhenwert entspricht, der so groß ist, dass dieser außerhalb der tatsächlich zu erwartenden Maximalhöhe der Artikel liegt. So können mögliche Störungen bei der Erfassung der Rohoberflächenhöhen 18 auf einfache Weise eliminiert werden. Die Fehlstellenerkennung ist damit insgesamt numerisch robuster.

Wie bereits zuvor beschrieben umfasst die Auswerteeinrichtung 15 mindestens ein Interpolationsfilter, das eingerichtet ist, die geglätteten Oberflächenhöhendaten 19 mittels Filterung durch Interpolation zu ermitteln. Vorzugsweise ist das Interpolationsfilter zur Filterung durch stückweise lineare Interpolation eingerichtet, so dass jeweils stückweise zwischen zwei benachbarten Rohzeilenhöhendaten 17 linear interpoliert wird.

Weiter bevorzugt umfasst die Auswerteeinrichtung 15 ein zur Rausch- und/oder Störunterdrückung ausgebildetes Filter. Ein solches weiteres Filter kann an verschiedenen Stellen der Signal- bzw. Datenverarbeitung zum Einsatz kommen, insbesondere jedoch zur Filterung der Rohzeilenhöhendaten 17, der geglätteten Rohoberflächenhöhendaten 18. Auch eine weiterführende Filterung der geglätteten Oberflächenhöhendaten 19 sowie der Differenzhöhendaten ist möglich. Insbesondere ist das weitere Filter optional als morphologisches Filter ausgebildet.

Besonders bevorzugt umfasst die Auswerteeinrichtung 15 eine Kantenerkennungseinrichtung. Die Kantenerkennung ist eingerichtet, auf Basis der Rohzeilenhöhendaten 17 und/oder der geglätteten Oberflächenhöhendaten 19 um die Ermittlung des Randes der Artikel durchzuführen. Der Randbereich der Artikel bezeichnet einen Bereich, der sich von dem äußeren Rand der Artikel bis zu einer von diesem Rand um eine vorgegebene Randbreite beabstandete Randbereichsgrenze erstreckt. Anders ausgedrückt bezeichnet der Randbereich einen Saum, der sich vom äußeren Rand der Artikel zur Artikelmitte hin erstreckt und den Artikel umrandet, also einen Randstreifen bildet.

Die Auswerteeinrichtung umfasst weiter eine Maskierungseinheit, die zum Maskieren derjenigen der Rohoberflächenhöhendaten 18 und/oder der geglätteten Oberflächenhöhendaten 19 ausgebildet ist, die in dem Randbereich lokalisiert sind. Die auf diese Weise maskierten Rohoberflächenhöhendaten 18 und/oder der geglätteten Oberflächenhöhendaten 19 werden so beim Ermitteln der Differenzhöhendaten 20 ausgeblendet.

Vorzugsweise umfasst die Auswerteeinrichtung 15 eine Fehlstellenclustererkennungseinheit, die ausgebildet ist, die Fehlstellendaten 21 nach Fehlstellencluster zu durchsuchen. Hierzu wertet die Auswerteeinrichtung 15 die Fehlstellendaten 21 dahingehend aus, dass diejenigen der Fehlstellencluster als Fehlstellen gekennzeichnet werden, deren Flächenmaß einen vorgegebenen unteren Flächenschwellenwert tfᵤ überschreitet.

Durch Vorgabe des Flächenschwellenwertes tfᵤ ist vorgebbar, welche Fehlstellencluster hinsichtlich ihrer (zweidimensionalen) räumlichen Ausdehnung vernachlässigbar klein sind und welche bereits eine Größe haben, dass diese als eine Fehlstelle klassifiziert und erkannt werden sollen.

Die erfindungsgemäße Vorrichtung sowie das erfindungsgemäße Verfahren kommen insbesondere bei der automatischen Fischverarbeitung zum Einsatz, insbesondere dann, wenn es sich bei den Artikeln um Fischfilets handelt. Die erfindungsgemäße Vorrichtung und das Verfahren eignen sich insbesondere zur Erkennung von Fehlstellen aufgrund möglicher in den Fischfilets vorhandener Zwischenräume.

Weiter bevorzugt, ist die Linienlaserlichtquelle 13 derart eingerichtet, dass diese rotes Laserlicht bereitstellt.

Die erfindungsgemäße Vorrichtung umfasst weiter - eine in der Zeichnung nicht gezeigte - Ausschleuseeinrichtung. Diese ist eingerichtet, diejenigen der Fischfilets von dem Förderband 11 auszuschleusen, bei denen Fehlstellen ermittelt worden sind, die einen vorbestimmten Fehlstellenschwellenwert t_{fs} überschreiten. Anders ausgedrückt ist die Vorrichtung ausgebildet, Fischfilets aus dem Produktions- und Verarbeitungsprozess auszuschleusen, die eine vorgegebene Mindestanzahl an Fehlstellen überschreiten.

## Patentansprüche

1. Verfahren zum automatischen Detektieren von Fehlstellen in der Oberfläche gewölbter Artikel der lebensmittelverarbeitenden Industrie, umfassend die Schritte
- Fördern der Artikel mittels eines Förderbandes (11) in eine Förderrichtung (12),
- Beleuchten der Artikel mittels einer oberhalb des Förderbandes (11) angeordneten Linienlaserlichtquelle (13), sodass die eine mittels der Linienlaserlichtquelle (13) erzeugte Laserlinie quer zu der Förderrichtung (12) ausgerichtet ist,
- zeilenweises Erfassen zurückgestreuten Lichtes mittels einer oberhalb des Förderbandes (11) angeordneten Kamera (14) während des Förderns der Artikel jeweils durch Aufnahme eines Zeilenprofils (16),
- Ermitteln von die Querschnittshöhen repräsentierenden Rohzeilenhöhendaten (17) aus dem aufgenommenen Zeilenprofilen (16),
- Ermitteln von Rohoberflächenhöhendaten (18) durch Zusammensetzen der in Förderrichtung ermittelten Rohzeilenhöhendaten (17),
- Ermitteln geglätteter Oberflächenhöhendaten (19) durch Filtern der Rohzeilenhöhendaten (17) und/oder der Rohoberflächenhöhendaten (18) unter Anwendung mindestens eines Filterkriteriums,
- Ermitteln von Differenzhöhendaten (20) durch Subtraktion der geglätteten Oberflächenhöhendaten (19) von den Rohoberflächenhöhendaten (18).

2. Verfahren nach Anspruch 1, **gekennzeichnet durch** Vergleichen der Differenzhöhendaten (20) mit mindestens einem vorgegebenen Schwellwert t₁ zum Erkennen der Fehlstellen in der Oberfläche der Artikel und Ermitteln von Fehlstellendaten (21), die zumindest die Positionen der Fehlstellen repräsentieren.

3. Verfahren nach der Ansprüche 1 oder 2, **gekennzeichnet durch** Absuchen der Differenzhöhendaten (20) nach Clustern und Klassifizieren dieser als Fehlstellen.

4. Verfahren nach einem der Ansprüche 1 bis 3, **dadurch gekennzeichnet, dass** die Beleuchtung mittels der Laserlichtquelle (13) schräg erfolgt, indem die Laserlichtquelle gegenüber dem Normalenvektor (22) des Förderbandes (11) um einen Beleuchtungswinkel im Bereich zwischen 10° und 80° geneigt angeordnet ist.

5. Verfahren nach einem der Ansprüche 1 bis 4, **dadurch gekennzeichnet, dass** die Aufnahme des Zeilenprofils (16) unter einem Aufnahmewinkel zwischen 15° und 90° gegenüber dem Normalenvektor (22) des Förderbandes (11) erfolgt.

6. Verfahren nach Anspruch 5, **dadurch gekennzeichnet, dass** der Betrag des Aufnahmewinkels kleiner als der Betrag des Beleuchtungswinkels ist.

7. Verfahren nach einem der Ansprüche 1 bis 6, **dadurch gekennzeichnet, dass** die Rohoberflächenhöhendaten (18) mit einem vorgegebenen unteren Schwellenwert t, verglichen werden, und falls diese kleiner als der untere Schwellenwert t, sind, als Hintergrund gekennzeichnet werden.

8. Verfahren nach einem der Ansprüche 1 bis 7, **dadurch gekennzeichnet, dass** die Rohoberflächenhöhendaten (18) mit einem vorgegebenen oberen Schwellenwert tₒ verglichen werden, und falls diese größer als der obere Schwellenwert tₒ sind, als Messfehler gekennzeichnet werden.

9. Verfahren nach einem der Ansprüche 1 bis 8, **dadurch gekennzeichnet, dass** das Ermitteln geglätteter Oberflächenhöhendaten (19) und/oder der Rohzeilenhöhendaten (17) zumindest mittels Filterung durch Interpolation erfolgt.

10. Verfahren nach Anspruch 9, **dadurch gekennzeichnet, dass** die Filterung durch stückweise lineare Interpolation erfolgt.

11. Verfahren nach einem der Ansprüche 1 oder 10, **dadurch gekennzeichnet, dass** die Filterung eine Rausch-/Störunterdrückung umfasst.

12. Verfahren nach Anspruch 11, **dadurch gekennzeichnet, dass** die Rausch-/Störunterdrückung durch morphologische Filterung bewirkt wird.

13. Verfahren nach einem der Ansprüche 1 bis 12, **gekennzeichnet durch** Durchführen einer Kantenerkennung der Rohzeilenhöhendaten (17) und/oder der geglätteten Oberflächenhöhendaten (19) zur Ermittlung des Randes der Artikel und Maskieren der Rohoberflächenhöhendaten (18) und/oder der geglätteten Oberflächenhöhendaten (19), die in einem Randbereich lokalisiert sind, wobei der Randbereich sich von dem Rand der Artikel bis zu einer von diesem Rand um eine vorgegebene Randbreite beabstandeten Randbereichsgrenze erstreckt sowie Ausblenden der maskierten Rohoberflächenhöhendaten (18) und/oder der geglätteten Oberflächenhöhendaten (19) bei dem Ermitteln der Differenzhöhendaten (20).

14. Verfahren nach einem der Ansprüche 2 bis 13, **gekennzeichnet durch** Durchsuchen der Fehlstellendaten (21) nach Fehlstellenclustern und Kennzeichnen derjenigen Fehlstellencluster, deren Flächenmaß einen vorgegebenen unteren Flächenschwellenwert tfᵤ überschreitet und Kennzeichnen derselben als Fehlstellen.

15. Verfahren zum automatischen Detektieren von Zwischenräumen in Fischfilets mittels eines Verfahrens nach einem der Ansprüche 1 bis 14, wobei die Artikel Fischfilets sind und die Fehlstellen mögliche in den Fischfilets vorhandene Zwischenräume.

16. Verfahren nach Anspruch 15, **dadurch gekennzeichnet, dass** die Beleuchtung der Fischfilets mit rotem Laserlicht durchgeführt wird.

17. Verfahren nach Anspruch 15 oder 16, **gekennzeichnet durch** automatisches Ausschleusen derjenigen Fischfilets von dem Förderband, deren ermittelte Fehlstellen einen vorbestimmten Fehlstellenschwellenwert t_{fs} überschreiten.

18. Vorrichtung zum automatischen Detektieren von Fehlstellen in der Oberfläche gewölbter Artikel der lebensmittelverarbeitenden Industrie, umfassend
- eine zum Fördern der Artikel mittels eines Förderbandes (11) in eine Förderrichtung (12) eingerichtete Fördereinrichtung (10),
- eine zum Beleuchten der Artikel eingerichtete Linienlaserlichtquelle (13), die oberhalb des Förderbandes (11) derart angeordnet ist, dass eine mittels der Linienlaserlichtquelle (13) erzeugte Laserlinie quer zu der Förderrichtung (12) ausgerichtet ist,
- eine zum zeilenweisen Erfassen zurückgestreuten Lichtes eingerichtete Kamera (14), die oberhalb des Förderbandes (11) angeordnet ist und ausgebildet ist, während des Förderns der Artikel Zeilenprofile (16) aufzunehmen,
- eine zum Ermitteln von die Querschnittshöhen repräsentierenden Rohzeilenhöhendaten (17) aus dem aufgenommenen Zeilenprofil (16) eingerichtete Auswerteeinrichtung (15), wobei die Auswerteeinrichtung (15) zudem ausgebildet ist,
- Rohoberflächenhöhendaten (18) durch Zusammensetzen der in Förderrichtung (12) ermittelten Rohzeilenhöhendaten (17) zu ermitteln,
- geglättete Oberflächenhöhendaten (19) durch Filtern der Rohzeilenhöhendaten (17) und/oder der Rohoberflächenhöhendaten (18) unter Anwendung mindestens eines Filterkriteriums zu ermitteln,
- Differenzhöhendaten (20) durch Subtraktion der geglätteten Oberflächenhöhendaten (19) von den Rohzeilenhöhendaten (17) zu ermitteln.

19. Vorrichtung nach Anspruch 18, **dadurch gekennzeichnet, dass** die Auswerteeinrichtung (15) weiter ausgebildet ist, die Differenzhöhendaten (20) mit mindestens einem vorgegebenen Schwellenwert t₁ zum Erkennen der Fehlstellen in der Oberfläche der Artikel und Ermitteln von Fehlstellendaten (21) zu vergleichen, wobei die Fehlstellendaten (21) zumindest die Positionen der Fehlstellen repräsentieren.

20. Vorrichtung nach einem der Ansprüche 18 oder 19, **dadurch gekennzeichnet, dass** die Auswerteeinrichtung (15) weiter ausgebildet ist, die Differenzhöhendaten (20) nach Clustern abzusuchen und diese als Fehlstellen zu klassifizieren.

21. Vorrichtung nach einem der Ansprüche 18 bis 20, **dadurch gekennzeichnet, dass** die Linienlaserlichtquelle (13) gegenüber der dem Normalenvektor (22) des Förderbandes (11) um einen Beleuchtungswinkel im Bereich zwischen 10° und 80° geneigt angeordnet ist.

22. Vorrichtung nach einem der Ansprüche 18 bis 21, **dadurch gekennzeichnet, dass** die Kamera (14) derart angeordnet ist, dass die Aufnahme des Zeilenprofils (16) unter einem Aufnahmewinkel zwischen 15° und 90° gegenüber dem Normalenvektor (22) des Förderbandes (11) erfolgt.

23. Vorrichtung nach Anspruch 22, **dadurch gekennzeichnet, dass** die Linienlaserlichtquelle (13) sowie die Kamera (14) derart angeordnet sind, dass der Betrag des Aufnahmewinkels kleiner als der Betrag des Beleuchtungswinkels ist.

24. Vorrichtung nach einem der Ansprüche 18 bis 23, **dadurch gekennzeichnet, dass** die Auswerteeinrichtung (15) ferner ausgebildet ist, die Rohoberflächenhöhendaten (18) mit einem vorgegebenen unteren Schwellenwert t, zu vergleichen, und falls diese kleiner als der untere Schwellenwert t, sind, als Hintergrund zu kennzeichnen.

25. Vorrichtung nach einem der Ansprüche 18 bis 24, **dadurch gekennzeichnet, dass** die die Auswerteeinrichtung (15) ferner ausgebildet ist, Rohoberflächenhöhendaten (18) mit einem vorgegebenen oberen Schwellenwert tₒ zu vergleichen, und falls diese größer als der obere Schwellenwert tₒ sind, als Messfehler zu kennzeichnen.

26. Vorrichtung nach einem der Ansprüche 18 bis 25, **dadurch gekennzeichnet, dass** die Auswerteeinrichtung (15) mindestens ein Interpolationsfilter umfasst, das eingerichtet ist, die geglätteten Oberflächenhöhendaten (19) mittels Filterung durch Interpolation zu ermitteln.

27. Vorrichtung nach Anspruch 26, **dadurch gekennzeichnet, dass** das Interpolationsfilter zur Filterung durch stückweise lineare Interpolation eingerichtet ist.

28. Vorrichtung nach einem der Ansprüche 18 bis 27, **dadurch gekennzeichnet, dass** die Auswerteeinrichtung (15) ein zur Rausch-/Störunterdrückung ausgebildetes weiteres Filter umfasst.

29. Vorrichtung nach Anspruch 28, **dadurch gekennzeichnet, dass** das weitere Filter als morphologisches Filter ausgebildet ist.

30. Vorrichtung nach einem der Ansprüche 18 bis 29, **dadurch gekennzeichnet, dass** die Auswerteeinrichtung (15) eine Kantenerkennungseinrichtung umfasst, die ausgebildet ist, eine Kantenerkennung der Rohzeilenhöhendaten (17) und/oder der geglätteten Oberflächenhöhendaten (19) zur Ermittlung des Randes der Artikel durchzuführen, und die Auswerteeinrichtung (15) eine Maskierungseinheit umfasst, die zum Maskieren derjenigen der Rohoberflächenhöhendaten (18) und/oder der geglätteten Oberflächenhöhendaten (19) ausgebildet ist, die in einem Randbereich lokalisiert sind, wobei der Randbereich sich von dem Rand der Artikel bis zu einer von diesem Rand um eine vorgegebene Randbreite beabstandeten Randbereichsgrenze erstreckt und die Auswerteeinrichtung (15) eingerichtet ist, die maskierten Rohoberflächenhöhendaten (18) und/oder der geglätteten Oberflächenhöhendaten (19) bei dem Ermitteln der Differenzhöhendaten (20) auszublenden.

31. Vorrichtung nach einem der Ansprüche 18 bis 30, **dadurch gekennzeichnet, dass** die Auswerteeinrichtung (15) eine Fehlstellenclustererkennungseinheit umfasst, die ausgebildet ist, die Fehlstellendaten (21) nach Fehlstellenclustern zu durchsuchen und diejenigen der Fehlstellencluster als Fehlstellen zu kennzeichnen, deren Flächenmaß einen vorgegebenen unteren Flächenschwellenwert tfᵤ überschreitet.

32. Vorrichtung zum automatischen Detektieren von Zwischenräumen in Fischfilets mittels einer Vorrichtung nach einem der Ansprüche 18 bis 31, wobei die Artikel Fischfilets sind und die Fehlstellen mögliche in den Fischfilets vorhandene Zwischenräume.

33. Vorrichtung nach Anspruch 32, **dadurch gekennzeichnet, dass** die Linienlaserlichtquelle (13) rotes Laserlicht bereitstellt.

34. Vorrichtung nach Anspruch 32 oder 33, weiter umfassend eine Ausschleuseeinrichtung, die eingerichtet ist, diejenigen der Fischfilets von dem Förderband (11) auszuschleusen, bei denen Fehlstellen ermittelt worden sind, die einen vorbestimmten Fehlstellenschwellenwert t_{fs} überschreiten.

## Claims

1. Method for automatically detecting defects in the surface of curved articles of the food processing industry, comprising the steps:
- conveying the articles in a conveying direction (12) by means of a conveyor belt (11),
- illuminating the articles by means of a line laser light source (13) arranged above the conveyor belt (11) such that a laser line generated by means of the line laser light source (13) is oriented transverse to the conveying direction (12),
- line-by-line detection of backscattered light while the articles are being conveyed, using a camera (14) arranged above the conveyor belt (11), by recording a line profile (16) in each case,
- determining the raw line height data (17) representing the cross-sectional heights from the line profile recorded (16),
- determining raw surface height data (18) by compiling the raw line height data (17) determined in the conveying direction,
- determining smoothed surface height data (19) by filtering the raw line height data (17) and/or the raw surface height data (18) using at least one filter criterion,
- determining differential height data (20) by subtracting the smoothed surface height data (19) from the raw surface height data (18).

2. Method according to claim 1, **characterised by** comparing the differential height data (20) with at least one predetermined threshold value t₁ to identify the defects in the surface of the articles and to determine defect data (21) which at least represent the positions of the defects.

3. Method according to claims 1 or 2, **characterised by** scanning the differential height data (20) for clusters and classifying them as defects.

4. Method according to any one of claims 1 to 3, **characterised in that** illumination by means of the laser light source (13) is carried out obliquely **in that** the laser light source is arranged inclined by an illumination angle ranging between 10° and 80° with respect to the normal vector (22) of the conveyor belt (11).

5. Method according to any one of claims 1 to 4, **characterised in that** the line profile (16) is recorded at a recording angle between 15° and 90° with respect to the normal vector (22) of the conveyor belt (11).

6. Method according to claim 5, **characterised in that** the value of the recording angle is smaller than the value of the illumination angle.

7. Method according to any one of claims 1 to 6, **characterised in that** the raw surface height data (18) are compared to a predetermined lower threshold value tᵤ and, if they are less than the lower threshold tᵤ, are identified as background.

8. Method according to any one of claims 1 to 7, **characterised in that** the raw surface height data (18) are compared to a predetermined upper threshold value tₒ and, if they are greater than the upper threshold value tₒ, are identified as measurement errors.

9. Method according to any one of claims 1 to 8, **characterised in that** the determination of smoothed surface height data (19) and/or raw line height data (17) is performed at least by means of filtering by interpolation.

10. Method according to claim 9, **characterised in that** the filtering is performed by piecewise linear interpolation.

11. Method according to any one of claims 1 or 10, **characterised in that** the filtering comprises noise/interference suppression.

12. Method according to claim 11, **characterised in that** the noise/interference suppression is brought about by morphological filtering.

13. Method according to any one of claims 1 to 12, **characterised by** performing an edge detection of the raw line height data (17) and/or the smoothed surface height data (19) to determine the edge of the articles and masking the raw surface height data (18) and/or the smoothed surface height data (19) which are located in an edge region, wherein the edge region extends from the edge of the articles up to an edge region boundary spaced apart from this edge by a predetermined edge width, as well as ignoring the masked raw surface height data (18) and/or the smoothed surface height data (19) when determining the differential height data (20).

14. Method according to any one of claims 2 to 13, **characterised by** searching the defect data (21) for defect clusters and identifying those defect clusters whose surface dimensions exceed a predetermined lower area threshold value tfᵤ and marking them as defects.

15. Method for automatically detecting spaces in fish fillets by means of a method according to any one of claims 1 to 14, wherein the articles are fish fillets and the defects are possible spaces present in the fish fillets.

16. Method according to claim 15, **characterised in that** the illumination of the fish fillets is performed with red laser light.

17. Method according to claim 15 or 16, **characterised by** automatic ejection from the conveyor belt of those fish fillets whose identified defects exceed a predetermined defect threshold value t_{fs}.

18. Apparatus for automatically detecting defects in the surface of curved articles of the food processing industry, comprising:
- a conveying device (10) adapted to convey the articles in a conveying direction (12) by means of a conveyor belt (11),
- a line laser light source (13) adapted to illuminate the articles which is arranged above the conveyor belt (11) in such a manner that a laser line generated by means of the line laser light source (13) is oriented transverse to the conveying direction (12),
- a camera (14) adapted to detect backscattered light line-by-line, which camera is arranged above the conveyor belt (11) and is configured to record line profiles (16) while the articles are being conveyed,
- an evaluation device (15) adapted to determine raw line height data (17) representing the cross-sectional heights from the line profile (16) recorded, wherein the evaluation device (15) is additionally configured
- to determine raw surface height data (18) by compiling the raw line height data (17) determined in the conveying direction (12),
- to determine smoothed surface height data (19) by filtering the raw line height data (17) and/or the raw surface height data (18) using at least one filter criterion,
- to determine differential height data (20) by subtracting the smoothed surface height data (19) from the raw line height data (17).

19. Apparatus according to claim 18, **characterised in that** the evaluation device (15) is further configured to compare the differential height data (20) to at least one predetermined threshold value t₁ for identifying the defects in the surface of the articles and determining defect data (21), wherein the defect data (21) at least represent the positions of the defects.

20. Apparatus according to one of claims 18 or 19, **characterised in that** the evaluation device (15) is further configured to search the differential height data (20) for clusters and to classify them as defects.

21. Apparatus according to any one of claims 18 to 20, **characterised in that** the line laser light source (13) is arranged inclined by an illumination angle ranging between 10° and 80° with respect to the normal vector (22) of the conveyor belt (11).

22. Apparatus according to any one of claims 18 to 21, **characterised in that** the camera (14) is arranged in such a manner that the line profile (16) is recorded at a recording angle between 15° and 90° with respect to the normal vector (22) of the conveyor belt (11).

23. Apparatus according to claim 22, **characterised in that** the line laser light source (13) and the camera (14) are arranged in such a manner that the value of the recording angle is smaller than the value of the illumination angle.

24. Apparatus according to any one of claims 18 to 23, **characterised in that** the evaluation device (15) is further configured to compare the raw surface height data (18) to a predetermined lower threshold value tᵤ and, if they are less than the lower threshold value tᵤ, to identify them as background.

25. Apparatus according to any one of claims 18 to 24, **characterised in that** the evaluation device (15) is further configured to compare raw surface height data (18) to a predetermined upper threshold value tₒ and, if they are greater than the upper threshold value tₒ, to identify them as measurement errors.

26. Apparatus according to any one of claims 18 to 25, **characterised in that** the evaluation device (15) comprises at least one interpolation filter which is adapted to determine the smoothed surface height data (19) by means of filtering by interpolation.

27. Apparatus according to claim 26, **characterised in that** the interpolation filter is adapted to filter by piecewise linear interpolation.

28. Apparatus according to any one of claims 18 to 27, **characterised in that** the evaluation device (15) comprises a further filter configured for noise/interference suppression.

29. Apparatus according to claim 28, **characterised in that** the further filter is configured as a morphological filter.

30. Apparatus according to any one of claims 18 to 29, **characterised in that** the evaluation device (15) comprises an edge detection device which is configured to perform an edge detection of the raw line height data (17) and/or the smoothed surface height data (19) to determine the edge of the articles, and the evaluation device (15) comprises a masking unit which is configured to mask those of the raw height data (18) and/or the smoothed surface height data (19) which are located in an edge region, wherein the edge region extends from the edge of the articles up to an edge region boundary spaced apart from this edge by a predetermined edge width and the evaluation device (15) is adapted to ignore the masked raw surface height data (18) and/or the smoothed surface height data (19) when determining the differential height data (20).

31. Apparatus according to any one of claims 18 to 30, **characterised in that** the evaluation device (15) comprises a defect cluster detection unit which is configured to search the defect data (21) for defect clusters and to identify as defects those of the defect clusters whose surface dimensions exceed a predetermined lower area threshold value tfᵤ.

32. Apparatus for automatically detecting spaces in fish fillets by means of an apparatus according to any one of claims 18 to 31, wherein the articles are fish fillets and the defects are possible spaces present in the fish fillets.

33. Apparatus according to claim 32, **characterised in that** the line laser light source (13) provides red laser light.

34. Apparatus according to claim 32 or 33, further comprising an ejection device which is adapted to eject those of the fish fillets from the conveyor belt (11) in which defects have been determined that exceed a predetermined defect threshold value t_{fs}.

## Revendications

1. Procédé de détection automatique de défauts dans la surface d'articles bombés de l'industrie de transformation des aliments, comprenant les étapes suivantes :
- le transport des articles dans une direction de transport (12) au moyen d'une bande transporteuse (11),
- l'éclairage des articles au moyen d'une source de lumière laser linéaire (13) agencée au-dessus de la bande transporteuse (11), de telle sorte que la ligne laser générée au moyen de la source de lumière laser linéaire (13) est orientée transversalement à la direction de transport (12),
- l'acquisition ligne par ligne de la lumière rétrodiffusée au moyen d'une caméra (14) agencée au-dessus de la bande transporteuse (11) pendant le transport des articles, respectivement par enregistrement d'un profil de ligne (16),
- la détermination de données de hauteur de ligne brutes (17) représentant les hauteurs de section transversale à partir des profils de ligne (16) enregistrés,
- la détermination de données de hauteur de surface brutes (18) par assemblage des données de hauteur de ligne brutes (17) déterminées dans la direction de transport,
- la détermination de données de hauteur de surface lissées (19) par filtrage des données de hauteur de ligne brutes (17) et/ou des données de hauteur de surface brutes (18) en utilisant au moins un critère de filtrage,
- la détermination de données de hauteur différentielles (20) par soustraction des données de hauteur de surface lissées (19) des données de hauteur de surface brutes (18).

2. Procédé selon la revendication 1, **caractérisé par** la comparaison des données de hauteur différentielles (20) à au moins une valeur de seuil prédéfinie t, pour identifier les défauts dans la surface des articles et la détermination de données de défauts (21) représentant au moins les positions des défauts.

3. Procédé selon les revendications 1 ou 2, **caractérisé par** la recherche de clusters dans les données de hauteur différentielles (20) et leur classification en tant que défauts.

4. Procédé selon l'une quelconque des revendications 1 à 3, **caractérisé en ce que** l'éclairage au moyen de la source de lumière laser (13) est effectué de manière oblique, par le fait que la source de lumière laser est agencée de manière inclinée par rapport au vecteur normal (22) de la bande transporteuse (11) selon un angle d'éclairage dans la plage comprise entre 10° et 80°.

5. Procédé selon l'une quelconque des revendications 1 à 4, **caractérisé en ce que** l'enregistrement du profil de ligne (16) est effectué selon un angle d'enregistrement compris entre 15° et 90° par rapport au vecteur normal (22) de la bande transporteuse (11).

6. Procédé selon la revendication 5, **caractérisé en ce que** le montant de l'angle d'enregistrement est inférieur au montant de l'angle d'éclairage.

7. Procédé selon l'une quelconque des revendications 1 à 6, **caractérisé en ce que** les données de hauteur de surface brutes (18) sont comparées à une valeur de seuil inférieure prédéfinie t, et, si elles sont inférieures à la valeur de seuil inférieure tᵤ, sont caractérisées en tant qu'arrière-plan.

8. Procédé selon l'une quelconque des revendications 1 à 7, **caractérisé en ce que** les données de hauteur de surface brutes (18) sont comparées à une valeur de seuil supérieure prédéfinie t₀, et si elles sont supérieures à la valeur de seuil supérieure t₀, sont caractérisées en tant qu'erreurs de mesure.

9. Procédé selon l'une quelconque des revendications 1 à 8, **caractérisé en ce que** la détermination des données de hauteur de surface lissées (19) et/ou des données de hauteur de ligne brutes (17) est effectuée au moins au moyen d'un filtrage par interpolation.

10. Procédé selon la revendication 9, **caractérisé en ce que** le filtrage est effectué par interpolation linéaire par morceaux.

11. Procédé selon l'une quelconque des revendications 1 ou 10, **caractérisé en ce que** le filtrage comprend une réduction du bruit/des perturbations.

12. Procédé selon la revendication 11, **caractérisé en ce que** la réduction du bruit/des perturbations est effectuée par filtrage morphologique.

13. Procédé selon l'une quelconque des revendications 1 à 12, **caractérisé par** la réalisation d'une identification de bord des données de hauteur de ligne brutes (17) et/ou des données de hauteur de surface lissées (19) pour déterminer le bord des articles et le masquage des données de hauteur de surface brutes (18) et/ou des données de hauteur de surface lissées (19) localisées dans une zone de bord, la zone de bord s'étendant depuis le bord des articles jusqu'à une limite de zone de bord espacée de ce bord d'une largeur de bord prédéfinie, et l'exclusion des données de hauteur de surface brutes masquées (18) et/ou des données de hauteur de surface lissées (19) lors de la détermination des données de hauteur différentielles (20).

14. Procédé selon l'une quelconque des revendications 2 à 13, **caractérisé par** la recherche de clusters de défauts dans les données de défauts (21) et la caractérisation des clusters de défauts dont la mesure de surface dépasse une valeur de seuil de surface inférieure prédéfinie tf, et leur caractérisation en tant que défauts.

15. Procédé de détection automatique d'interstices dans des filets de poisson au moyen d'un procédé selon l'une quelconque des revendications 1 à 14, dans lequel les articles sont des filets de poisson et les défauts sont d'éventuels interstices présents dans les filets de poisson.

16. Procédé selon la revendication 15, **caractérisé en ce que** l'éclairage des filets de poisson est réalisé avec une lumière laser rouge.

17. Procédé selon la revendication 15 ou 16, **caractérisé par** l'éjection automatique de la bande transporteuse des filets de poisson dont les défauts déterminés dépassent une valeur de seuil de défauts t_{fs} prédéterminée.

18. Appareil de détection automatique de défauts dans la surface d'articles bombés de l'industrie de transformation des aliments, comprenant :
- un dispositif de transport (10) adapté pour transporter les articles au moyen d'une bande transporteuse (11) dans une direction de transport (12),
- une source de lumière laser linéaire (13) adaptée pour éclairer les articles, qui est agencée au-dessus de la bande transporteuse (11) de telle sorte qu'une ligne laser générée au moyen de la source de lumière laser linéaire (13) est orientée transversalement à la direction de transport (12),
- une caméra (14) adaptée pour acquérir la lumière rétrodiffusée ligne par ligne, qui est agencée au-dessus de la bande transporteuse (11) et qui est configurée pour enregistrer des profils de ligne (16) pendant le transport des articles,
- un dispositif d'évaluation (15) adapté pour déterminer des données de hauteur de ligne brutes (17) représentant les hauteurs de section transversale à partir du profil de ligne (16) enregistré, le dispositif d'évaluation (15) étant en outre configuré
- pour déterminer des données de hauteur de surface brutes (18) par assemblage des données de hauteur de ligne brutes (17) déterminées dans la direction de transport (12),
- pour déterminer des données de hauteur de surface lissées (19) par filtrage des données de hauteur de ligne brutes (17) et/ou des données de hauteur de surface brutes (18) en utilisant au moins un critère de filtrage,
- pour déterminer des données de hauteur différentielles (20) par soustraction des données de hauteur de surface lissées (19) des données de hauteur de ligne brutes (17).

19. Appareil selon la revendication 18, **caractérisé en ce que** le dispositif d'évaluation (15) est en outre configuré pour comparer les données de hauteur différentielles (20) à au moins une valeur de seuil prédéfinie t₁ pour identifier les défauts dans la surface des articles et déterminer des données de défauts (21), les données de défauts (21) représentant au moins les positions des défauts.

20. Appareil selon l'une quelconque des revendications 18 ou 19, **caractérisé en ce que** le dispositif I d'évaluation (15) est en outre configuré pour rechercher des clusters dans les données de hauteur différentielles (20) et pour les classifier en tant que défauts.

21. Appareil selon l'une quelconque des revendications 18 à 20, **caractérisé en ce que** la source de lumière laser linéaire (13) est agencée de manière inclinée par rapport au vecteur normal (22) de la bande transporteuse (11) selon un angle d'éclairage dans la plage comprise entre 10° et 80°.

22. Appareil selon l'une quelconque des revendications 18 à 21, **caractérisé en ce que** la caméra (14) est agencée de telle sorte que l'enregistrement du profil de ligne (16) est effectué selon un angle d'enregistrement compris entre 15° et 90° par rapport au vecteur normal (22) de la bande transporteuse (11).

23. Appareil selon la revendication 22, **caractérisé en ce que** la source de lumière laser linéaire (13) ainsi que la caméra (14) sont agencées de telle sorte que le montant de l'angle d'enregistrement est inférieur au montant de l'angle d'éclairage.

24. Appareil selon l'une quelconque des revendications 18 à 23, **caractérisé en ce que** le dispositif d'évaluation (15) est en outre configuré pour comparer les données de hauteur de surface brutes (18) à une valeur de seuil inférieure prédéfinie t, et, si elles sont inférieures à la valeur de seuil inférieure tᵤ, pour les caractériser en tant qu'arrière-plan.

25. Appareil selon l'une quelconque des revendications 18 à 24, **caractérisé en ce que** le dispositif d'évaluation (15) est en outre configuré pour comparer les données de hauteur de surface brutes (18) à une valeur de seuil supérieure prédéfinie tₒ et, si elles sont supérieures à la valeur de seuil supérieure tₒ, pour les caractériser en tant qu'erreurs de mesure.

26. Appareil selon l'une quelconque des revendications 18 à 25, **caractérisé en ce que** le dispositif d'évaluation (15) comprend au moins un filtre d'interpolation adapté pour déterminer les données de hauteur de surface lissées (19) par filtrage par interpolation.

27. Appareil selon la revendication 26, **caractérisé en ce que** le filtre d'interpolation est adapté pour filtrer par interpolation linéaire par morceaux.

28. Appareil selon l'une quelconque des revendications 18 à 27, **caractérisé en ce que** le dispositif d'évaluation (15) comprend un autre filtre configuré pour la réduction du bruit/des perturbations.

29. Appareil selon la revendication 28, **caractérisé en ce que** l'autre filtre est configuré sous forme de filtre morphologique.

30. Appareil selon l'une quelconque des revendications 18 à 29, **caractérisé en ce que** le dispositif d'évaluation (15) comprend un dispositif d'identification de bord configuré pour réaliser une identification de bord des données de hauteur de ligne brutes (17) et/ou des données de hauteur de surface lissées (19) pour déterminer le bord des articles, et le dispositif d'évaluation (15) comprend une unité de masquage configurée pour masquer les données de hauteur de surface brutes (18) et/ou les données de hauteur de surface lissées (19) qui sont localisées dans une zone de bord, la zone de bord s'étendant depuis le bord des articles jusqu'à une limite de zone de bord espacée de ce bord d'une largeur de bord prédéfinie, et le dispositif d'évaluation (15) étant adapté pour exclure les données de hauteur de surface brutes masquées (18) et/ou les données de hauteur de surface lissées (19) lors de la détermination des données de hauteur différentielles (20).

31. Appareil selon l'une quelconque des revendications 18 à 30, **caractérisé en ce que** le dispositif d'évaluation (15) comprend une unité d'identification de clusters de défauts qui est configurée pour rechercher des clusters de défauts dans les données de défauts (21) et pour caractériser en tant que défauts les clusters de défauts dont la mesure de surface dépasse une valeur de seuil de surface inférieure tf, prédéfinie.

32. Appareil de détection automatique d'interstices dans des filets de poisson au moyen d'un appareil selon l'une quelconque des revendications 18 à 31, dans lequel les articles sont des filets de poisson et les défauts sont d'éventuels interstices présents dans les filets de poisson.

33. Appareil selon la revendication 32, **caractérisé en ce que** la source de lumière laser linéaire (13) fournit une lumière laser rouge.

34. Appareil selon la revendication 32 ou 33, comprenant en outre un dispositif d'éjection adapté pour éjecter de la bande transporteuse (11) les filets de poisson pour lesquels des défauts dépassant une valeur de seuil de défauts prédéterminée t_{fs} ont été déterminés.
